(19) Europäisches Patentamt
European Patent Office
Office européen des brevets

(11) Publication number: **0 254 060 A2**

(12) **EUROPEAN PATENT APPLICATION**

(21) Application number: 87109072.6

(22) Date of filing: 24.06.87

(51) Int. Cl.[4]: C09K 19/38 , C09K 19/00

(30) Priority: 25.06.86 IT 2090586

(43) Date of publication of application: 27.01.88 Bulletin 88/04

(84) Designated Contracting States: BE DE ES FR GB NL SE

(71) Applicant: Montedison S.p.A.
31, Foro Buonaparte
I-20121 Milan(IT)

(72) Inventor: Chapoy, L. Lawrence
60, Via Davicini
I-28040 Lesa Novara(IT)
Inventor: Marcher, Bjorn
347 B Lyngbyvej
DK-2820 Gentofte(DK)

(74) Representative: Weinhold, Peter, Dr. et al
Patentanwälte Dr. V. Schmied-Kowarzik
Dipl.-Ing. G. Dannenberg Dr. P. Weinhold Dr.
D. Gudel Dipl.-Ing. S. Schubert Dr. P. Barz
Siegfriedstrasse 8
D-8000 München 40(DE)

# (54) Photoconductive films.

(57) Photoconductive films having thickness below 20 microns, prepared from concentrated lyophasic solutions of a polymer having the following repeating unit:

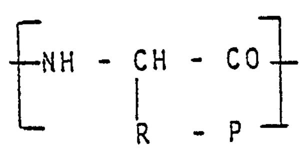

(I)

wherein R is an alkylene radical having 1 to 20 carbon atoms and P is a photoconductive group.

EP 0 254 060 A2

# PHOTOCONDUCTIVE FILMS

The present invention relates to photoconductive films.

In particular, the present invention relates to photoconductive films prepared starting from polymers having properties of liquid crystals.

Well known from the art are high molecular weight polymers such as polyvinylcarbazole or photoconductive liquid crystals with low molecular weight such as the products described in "Molecular Crystals and Liquid Crystals" 1984, vol. 105, pages 353-374.

By means of these products it is possible to prepare photoconductive films, which could find useful applications in specialized sectors such as microelectronics.

The drawback of these products resides in the fact that they exhibit a satisfactory photoconductive efficiency only when subjected to the action of strong electric fields, usually higher than $10^6$ Volt/m.

For this reason such films cannot be successfully utilized in the manufacture of switches or apparatus operating at low voltages.

The applicant has now found, and this is the object of the present invention, that the above mentioned drawback can be overcome by mans of photoconductive films having thicknesses below 20 microns, consisting of lyotropic solutions at concentrations higher than 10 % of a polymer having the following repeating unit:

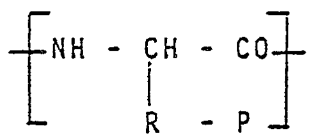

(I)

and an intrinsic viscosity in dimethylformamide at 25°C ranging from 0.5 to 2.5 dl/g and in which R may be an alkylene radical having 1 to 20 carbon atoms, $-(CH_2)_m-CO-O$; $-(CH_2)_m-NH-$or $-(CH_2)_m-NH-CO$ forming a C-C-bond with the backbone of the molecule, with m being an integer from 1 to 20, and P is a photoconductive group.

Any photoconductive group may be present in the polymers of general formula (I), although the carbazole group is the preferred one.

Examples of other photoconductive groups are: anthracene, perylene, etc.

In particular, the preferred polymer for the production of the films forming the object of the invention is poly-(N-(9-carbazolylcarbonyl)-L-lysine) having an intrinsic viscosity in dimethylformamide at 25°C ranging from 0.5 to 2.5 dl/g, the method of preparing it being described in "Macromolecules", February 1983, vol. 16, page 181.

Such polymer is an aminoacid polymer having an alpha-helical structure, where from aligned and stackwise arranged photoconductive side groups are extending, and which exhibits properties of a liquid crystal in a liquid phase.

The film, object of the present invention is preparable starting from lyophases comprising the polymer of general formula (I) dissolved in proper solvents and by placing such solutions between two little quartz plates at such a distance from each other as to obtain a final product having a thickness below 20 microns.

The quartz plates are generally so treated as to favour electric current circulation without affecting the transparent properties. Such treatment consists in depositing, onto the two faces in contact with the solution, a very thin layer, such as e.g. from 0.1 to 0.5 microns, of metal oxides, such as for example, tin oxide and indium oxide.

The samples so obtained are therefore made of films of poly mer solutions, in such films, the polymer spontaneously produces a nematic homotropic alignment with the helicoid axis perpendicular to the plane of the film, as is apparent by polarized optical microscopy.

The concentrated solutions have a polymer concentration higher than 10% by weight, preferably from 20 to 60%.

Any solvent having the property to form lyophases is useful to prepare the films forming the object of the present invention; however, ketonic solvents such as isophorone, cyclohexanone, or ethereal solvents, such as tetrahydrofuran, are the preferred ones.

- The films of the present invention have a photoconductive efficiency higher than 80% as measured by applying electric fields lower than $10^6$ Volt/m; the term "photoconductive efficiency" means the ratio of the number of conducted electrons to the number of photons absorbed by the sample in the illuminated state.

In particular, the films obtained starting from lyophases of polymers of general formula (I) have proved to be much more effective, as regards photoconductivity, than the films prepared from the same polymers in the solid phase. Such differences are still present, although to a lower degree, also when such polymers are modified with electron-acceptor doping agents, such as trinitrofluorenone, which is known in the art as a product capable of improving the photoconductor efficiency in hole carriers such as carbazole.

The films according to the present invention can be used in the field of microelectronics, for example in low-voltage switches activated by light, in instruments for measuring light intensity, operating at low voltage, and the like.

The following illustrative, but not limitative example is gi ven to facilitate the understanding of the present invention and the embodiment thereof.

## Example

A photoconductive film was prepared based on poly(N-(9-carbazolylcarbonyl)-L-lysine) having a 10-micron thickness by using two quartz plates of 5 $cm^2$ surface, the faces thereof in contact with the solution were coated with a 0.3 micron thick layer of tin and indium oxides.

The polymer had an intrinsic viscosity of 1.1 dl/g at 25°C in dimethylformamide and had been dissolved in isophorone in order to have a solution at 25% concentration.

The solution was applied between the two quartz plates and the lyophase was spontaneously aligned to a nematic homotrope alignment as discerned from polarized optical microscopy at magnifications of about 100 times.

To the sample so prepared, an electric field of $5 \times 10^5$ Volt/m was applicated; the photoconductive efficiency of the film, under a light intensity of about 2 $W/m^2$ at 335 nm, was 80%.

## Claims

1. Photoconductive films based on polymers having properties of liquid crystals, characterized in that they have thicknesses below 20 microns and are composed of lyotropic solutions, at concentrations higher than 10% of a polymer having the following repeating unit:

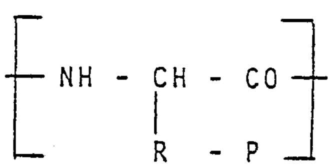

(I)

and an intrinsic viscosity in dimethylformamide at 25°C ranging from 0.5 to 2.5 dl/g and in which R may be an alkylene radical having 1 to 20 carbon atoms, $-(CH_2)_m-CO-O-$; $-(CH_2)_m-NH-$or $-(CH_2)_m-NH-CO-$, forming a C-C-bond with the backbone of the molecule, with m being an integer from 1 to 20, and P is a photoconductive group.

2. The films of claim 1, wherein the photoconductive group is a carbazole group.

3. The films according to any of the preceding claims, wherein the polymer of general formula (I) is poly(N-(9-carbazolylcarbonyl)-L-lysine) having an intrinsic viscosity in dimethylformamide at 25°C ranging from 0.5 to 2.5 dl/g.

4. The films of one or more of the claims 1-3, wherein the solvent is selected from isophorone, cyclohexanone, tetrahydrofuran.